# EUROPÄISCHE PATENTANMELDUNG

(11) **EP 4 108 389 A1**
(43) Veröffentlichungstag der Anmeldung: **28.12.2022**
(21) Anmeldenummer: 21181228.4
(22) Anmeldetag: 23.06.2021
(51) Int. Cl.: B25J 9/16

(54) **PROJEKTIEREN EINER VON EINER SICHERHEITSGERICHTETEN STEUERUNG ANGESTEUERTEN KINEMATIK**

(71) Anmelder: Siemens Aktiengesellschaft, 80333 München (DE)
(72) Erfinder: Bitterolf, David, 91056 Erlangen (DE); Tauchmann, Sven, 09127 Chemnitz (DE)

(57) **Zusammenfassung**

Die Erfindung betrifft ein Verfahren zum Projektieren einer von einer sicherheitsgerichteten Steuerung angesteuerten Kinematik in einem von mindestens einer Schutzzone begrenzten Arbeitsraum und/ oder der mindestens einen Schutzzone, umfassend die Schritte: Bereitstellen eines virtuellen Antriebsreglers der Kinematik, Bereitstellen eines Mechanikmodells der Kinematik, Ermitteln von sicherheitsrelevanten Antriebsdaten der Kinematik als Reaktion auf mindestens eine vorgebbare sicherheitsgerichtete Funktion der Steuerung, wobei durch Anwenden des virtuellen Antriebsreglers ein Eingangswert für das Mechanikmodell ermittelt wird und als Ergebnis des Mechanikmodells in Abhängigkeit von dem Eingangswert die sicherheitsrelevanten Antriebsdaten ermittelt werden, Verwenden der sicherheitsrelevanten Antriebsdaten für das Projektieren der Kinematik und/ oder der mindestens einen Schutzzone. Die Erfindung betrifft ferner eine entsprechende Projektierungseinrichtung sowie eine entsprechendes Computerprogrammprodukt.

## Beschreibung

Die Erfindung betrifft ein Verfahren zum Projektieren einer von einer sicherheitsgerichteten Steuerung angesteuerten Kinematik in einem von mindestens einer Schutzzone begrenzten Arbeitsraum und/ oder der mindestens einen Schutzzone.

In vielen Anwendungsbereichen in der Industrieautomatisierung sind Kinematiken beteiligt. Beispielsweise werden Roboter innerhalb von Roboterzellen oder Fertigungszellen eingesetzt, um Automatisierungsaufgaben zu übernehmen. Dabei ist von besonderer Bedeutung einen sicheren Betrieb der Kinematik sicherzustellen. Für die Auslegung einer Roboterzelle oder die Ermittlung von Zellengrenzen sowie die geeignete Positionierung einer Kinematik sowie Zubehör, wie beispielsweise Tische, Be- oder Entladesysteme, Sicherheitsabstände zu Türen etc. ist insbesondere die Kenntnis über die Brems- und Anhaltewege einer Kinematik notwendig. Die Angaben dazu sind heute nach ISO10218-1 standardisiert. Für die Ermittlung der Werte ist herkömmlicherweise eine reale Kopplung eines konkreten Robotertyps mit einer konkreten Steuerung notwendig. Es werden achsweise Bremszeit/-weg in Abständen von 33% für Traglast und Reichweite, ebenfalls typischerweise in 33%-Schritten variiert, ermittelt. Diese Werte müssen nach dem Errichten der Roboterzelle am realen Roboter im Rahmen des Safety-Abnahmetests überprüft werden. Es sind somit bislang im Vorfeld aufwändige Messungen unter realen Bedingungen notwendig.

Vor diesem Hintergrund ist es eine Aufgabe der vorliegenden Erfindung eine umfassende Planung einer Kinematik in einem von mindestens einer Schutzzone begrenzten Arbeitsraum zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zum Projektieren einer von einer sicherheitsgerichteten Steuerung angesteuerten Kinematik in einem von mindestens einer Schutzzone begrenzten Arbeitsraum und/ oder der mindestens einen Schutzzone, umfassend die Schritte: Bereitstellen eines virtuellen Antriebsreglers der Kinematik, Bereitstellen eines Mechanikmodells der Kinematik, Ermitteln von sicherheitsrelevanten Antriebsdaten der Kinematik als Reaktion auf mindestens eine vorgebbare sicherheitsgerichtete Funktion der Steuerung, wobei durch Anwenden des virtuellen Antriebsreglers ein Eingangswert für das Mechanikmodell ermittelt wird und als Ergebnis des Mechanikmodells in Abhängigkeit von dem Eingangswert die sicherheitsrelevanten Antriebsdaten ermittelt werden, Verwenden der sicherheitsrelevanten Antriebsdaten für das Projektieren der Kinematik und/ oder der mindestens einen Schutzzone.

Vorzugsweise wird die derart projektierte Kinematik in der Arbeitsumgebung eingesetzt oder mittels der Steuerung bewegt. Vorzugsweise wird ferner mit den ermittelten und vorbelegten Safety-Werten im Antrieb direkt mit einem Abnahmetest einer Anlage, in der die Kinematik eingesetzt wird, begonnen.

Vorzugsweise wird die Kinematik in einer Umgebung mit derart projektierter Schutzzone eingesetzt oder in dieser mittels der Steuerung bewegt. Dabei werden beispielsweise die ermittelten sicherheitsrelevanten Antriebsdaten sowohl für das Projektieren der Kinematik als auch für das Projektieren der Schutzzone verwendet.

Durch das Zusammenspiel von virtuellem Antriebsregler und dem Mechanikmodell der Kinematik wird es ermöglicht, eine Reaktion auf eine sicherheitsgerichtete Funktion der Steuerung, wie beispielsweise Stopp-Vorgänge, die gemäß Safety-Vorgaben definiert sind oder die standardisiert sind, im Modell nachzubilden und mittels der Modelle sicherheitsrelevante Antriebsdaten nachzubilden. Unter einer sicherheitsgerichteten Funktion der Steuerung wird insbesondere eine sicherheitsgerichtet ausgeführte Anhalte- oder Brems-Funktion bezeichnet. Beispielsweise erfolgt eine Simulation eines durch die Steuerung der Kinematik oder manuell eingeleiteten Stoppvorganges, beispielsweise eines sogenannten Safe Stop 1 oder kurz SS1, oder eines Safe Torque Off, kurz STO, oder eines Safe operating stop, SOS, um zu ermitteln, welcher Bremsweg und/ oder welche Bremszeit eine Achse des Antriebs benötigt. Dabei muss der Stoppvorgang nicht an der realen Anlage getestet werden, sondern kann mittels des virtuellen Reglers und des Mechanikmodells in Hinblick darauf simuliert werden, wie er sich auf den Antrieb und die Stoppbewegung der Achse des Antriebs auswirken wird.

Die dermaßen ermittelten sicherheitsgerichteten Antriebsdaten werden vorteilhaft vorab ermittelt und können somit beispielsweise vor Inbetriebnahme einer Anlage bereits für die Projektierung verwendet werden. Die so ermittelten sicherheitsgerichteten Antriebsdaten können ferner vorteilhaft in einer Planungsphase ermittelt und dann direkt in der Inbetriebnahmephase für die Einrichtung der Anlage verwendet werden.

Vorteilhaft entfällt eine aufwändige Aufzeichnung von Traces der Brems- und Anhaltewege einzelner Achsen am realen Roboter unter Verwendung der entsprechenden Sicherheitsfunktionen im Rahmen eines Safety-Abnahmetests für den Inbetriebnehmer. Stattdessen kann auf die ermittelten sicherheitsgerichteten Antriebsdaten zurückgegriffen werden.

Die erfindungsgemäß ermittelten sicherheitsgerichteten Antriebsdaten sind überdies vorteilhafterweise für beliebige Ausgangswerte der Kinematik, also beliebige Traglast oder Geschwindigkeiten und beliebige Kombinationen daraus ermittelbar, so dass ein Interpolieren zwischen einzelnen zuvor im Test an der realen Anlage gemessenen Werten entfällt. Somit können schon in der Projektierungsphase, aber auch im späteren Betrieb oder im Einrichtbetrieb beliebige Traglast oder Reichweiten oder Geschwindigkeiten passend zu einer konkreten Applikation verwendet werden, ohne dass diese schon vorab bekannt sein müssten.

Die Brems- oder Anhaltewege sowie die Bremszeiten werden zudem kontinuierlich während der Simulation ermittelt und sind vorteilhafterweise nicht nur zeitdiskret bereitstellbar.

Ebenso kann die Auslegung einer Roboterzelle, bei der Schutzzonen an die eingesetzte Kinematik anzupassen sind, passgenau für einen geplanten Einsatz einer Kinematik erfolgen. Beispielsweise wird so vorteilhaft vermieden, dass Schutzzonen unnötig groß eingerichtet werden, weil nur Brems- oder Anhaltewege von bestimmten zuvor vermessenen Konstellationen der Kinematik und für bestimmte sicherheitsgerichtete Funktionen vermessen wurden und somit eine konservative Abschätzung für nicht-vermessene Konstellationen erfolgen muss.

Als Kinematik werden serielle Kinematiken, beispielsweise Gelenkarmroboter, mehrachsige Knickarmroboter, SCARA-Roboter oder Portalroboter, oder parallele Kinematiken, beispielsweise Deltapicker, eingesetzt.

Somit werden einerseits die Projektierung und Einrichtung der Kinematik selbst, insbesondere zu Zwecken einer Zertifizierung, erleichtert und andererseits die Projektierung und Auslegung einer oder mehrerer Schutzzonen optimiert.

Die derart projektierte Kinematik wird in einem sicherheitsgerichteten Betrieb eingesetzt. Die derart projektierte Schutzzone wird in einem sicherheitsgerichteten Betrieb der Kinematik oder durch eine sicherheitsgerichtete Steuerung verwendet.

Gemäß einer Ausgestaltung werden als sicherheitsrelevante Antriebsdaten Anhaltewege von Achsen der Kinematik ermittelt. Unter einem Anhalteweg wird beispielsweise die Bewegung einer Achse verstanden, die diese ausführt, nachdem ein Stoppvorgang eingeleitet wurde. Diese Bewegung wird beispielsweise für Rundachsen in Grad oder für Linearachsen in Millimeter angegeben. Ferner kann auch ein im kartesischen Raum zurückgelegter Weg als Anhalteweg bezeichnet werden. Der Anhalteweg ist dabei der Weg bis zu einem Punkt, an dem eine Achse anhält. Ein zugehöriger Bremsweg als für den Bremsvorgang benötigter Gesamtweg ist beispielsweise aufgrund einer Schwingung etwas größer als der Anhalteweg. Auf Basis eines Modells, das die auftretenden Schwingungen erfasst, wird in einer Ausgestaltung vorteilhaft der Bremsweg ermittelt.

Als sicherheitsrelevante Antriebsdaten werden insbesondere Anhaltewege aller zu der Kinematik zugehöriger Achsen ermittelt.

Der Anhalteweg beeinflusst essentiell die Ausgestaltung einer Schutzzone oder Auslegung einer Zelle, in der sich die Kinematik bewegt. Es ist anhand der Anhaltewege der einzelnen Achsen insbesondere zu ermitteln, welche Bereiche des Arbeitsraums nach einem Einleiten eines Stoppvorganges von Teilen der Kinematik noch erreicht werden können. Dementsprechend können dann Schutzräume beispielsweise um Wände der Zelle oder um Gegenstände oder um andere Kinematiken innerhalb der Zelle gelegt werden, die bei Eindringen der Kinematik in den Schutzraum ein Einleiten des Stoppvorganges bewirken.

Gemäß einer Ausgestaltung werden als sicherheitsrelevante Antriebsdaten zu Anhaltewegen von Achsen der Kinematik zugehörige Bremszeiten ermittelt. Mit den zugehörigen Bremszeiten können weitere Sicherheitsfunktionen eingerichtet werden. Beispielsweise werden so einfallende mechanische Bremsen oder Haltebremsen eingerichtet, die erst nach einer festlegbaren Zeit eingreifen sollen. Liegt kein Fehler vor, so ist zu diesem Zeitpunkt die Bremsrampe bereits abgefahren, d.h. ein geregeltes Herunterfahren der Drehzahl bereits abgeschlossen. Ferner kann aus den Bremszeiten neben dem Zeitpunkt für das Einfallen einer Bremse auch deren gewünschte Bremsschließzeit konfiguriert werden. Auch das Einleiten weiterer sicherheitsgerichteter Bremsvorgänge, wie das STO, d.h. die Impulslöschung, insbesondere durch Abtrennen vom Stromnetz, kann in Kenntnis der Bremszeiten optimiert werden.

Gemäß einer Ausgestaltung wird basierend auf den sicherheitsrelevanten Antriebsdaten die mindestens eine sicherheitsgerichtete Funktion konfiguriert. Vorteilhaft können die ermittelten sicherheitsrelevanten Antriebsdaten dafür verwendet werden, die sicherheitsgerichtete Funktion selbst für den konkreten Einsatzfall zu optimieren. Beispielsweise ist es möglich, eine Bremsrampenüberwachung zu verbessern, indem sie beispielsweise in Kenntnis des erwartbaren Verlaufs feiner eingestellt wird, d.h. beispielsweise Drehzahl-Grenzwerte näher am erwarteten Verlauf gewählt werden. Ferner wird beispielsweise eine optimale Bremsrampenzeit ermittelt und für diese eine minimale Toleranz für einen sog. Safe Acceleration Monitor festgelegt. Ferner werden beispielsweise Geschwindigkeitsgrenzwerte von Sicherheitsfunktionen wie Safe limited speed für die konkrete Kinematik und den konkreten Antrieb an die ermittelten sicherheitsrelevanten Antriebsdaten angepasst eingerichtet.

Gemäß einer Ausgestaltung werden die sicherheitsrelevanten Antriebsdaten in einer graphischen Darstellung angezeigt. Beispielsweise kann eine Inbetriebnahme-Software vor der Durchführung eines realen Tests in einer Simulation an einem Bildschirm eines HMIs oder PCs anzeigen, ob ein Anhalteweg ausreichend ist oder ob eine Kollision mit einem Element in der Umgebung der Kinematik droht.

Es werden beispielsweise Anhaltewege sowie Arbeitsbereiche, Schutzumhausungen, Einrichtebereiche, Zugangstüren zu Zellen, die Kinematik selbst sowie Objekte innerhalb der Zelle angezeigt.

In einer Erweiterung kann auch ein nachfolgender realer Test mit der Ermittlung realer Anhaltewege als Trace aufgezeichnet und überlagert zu der graphischen Darstellung der ermittelten sicherheitsrelevanten Antriebsdaten dargestellt werden. So wird beispielsweise ein Plausibilitätscheck durchgeführt, der in ein Abnahmeprotokoll übernommen werden kann.

Gemäß einer Ausgestaltung werden die sicherheitsrelevanten Antriebsdaten zur graphischen Darstellung an ein Engineeringprogramm übermittelt. Somit wird eine dynamische Anzeige in einem graphischen Projektierungstool erreicht, was eine sehr viel schnellere und leichtere Planung von Roboterzellen, Schutzumhausungen, etc. ermöglicht. Somit kann eine Anpassung von Schutzbehausungen oder Sicherheitszonen erfolgen und direkt eine Auswirkung auf den Bremsvorgang bei geänderten Umgebungsbedingungen getestet werden.

Gemäß einer Ausgestaltung wird der virtuelle Antriebsregler durch ein Reglermodell gebildet, und mittels des Reglermodells ein Drehmomentsollwert in Abhängigkeit von einem Drehzahlsollwert und einem Drehzahlistwert berechnet. Der Drehzahlsollwert ergibt sich aus der vorgegebenen sicherheitsgerichteten Funktion, die je nach Verletzung von Grenzwerten oder manuell, beispielsweise durch Betätigen eines Not-Halt-Schalters, eingeleitet wird. Somit werden die vorgesehenen Brems- oder Anhalte-Vorgänge durch das Reglermodell nachgebildet und ein zu erwartender Drehmomentsollwert ermittelt. Das Reglermodell wird auf den zu verwendenden Antrieb und die zugehörigen Achseigenschaften des Roboters angepasst.

Vorteilhaft kann somit ein Anwender vorab, vor Inbetriebnahme seiner Anlage, eine auf seinen konkreten Anlagenaufbau, inklusive verbauter oder geplanter Antriebe, ausgerichtete Reaktion der Kinematik simulieren.

Gemäß einer Ausgestaltung wird mittels des Mechanikmodells ein Drehzahlistwert oder Lageistwert in Abhängigkeit von dem Drehmomentsollwert berechnet. Um akkurate Ergebnisse für die sicherheitsrelevanten Antriebsdaten zu erhalten, ist neben der akkuraten Abbildung des Reglers auch die Berücksichtigung des Physikmodells der Kinematik zu berücksichtigen. Dazu ist auch die Drehzahlregelstrecke mit einem passenden Modell vorab zu ermitteln und vorteilhafterweise in der Projektierungs-software zu hinterlegen.

Als mechanisches System wird die Achse als starre Trägheit zugrunde gelegt, wobei je Roboterachse eine variable Trägheit angenommen wird. Der Wert der Trägheit wird aus den Masseneigenschaften der Roboterglieder des Roboterherstellers für die aktuelle Position gerechnet. Daraus wird ferner zu jedem Zeitpunkt das erforderliche Antriebsmoment gerechnet, um einen Roboterarm entgegen der wirkenden Schwerkraft zu halten. Somit können die Einflüsse berücksichtigt werden, die ein wirksames Bremsmoment reduzieren.

Vorteilhafterweise sind die Reglerparameter vorab bekannt und stehen für die Simulation des Drehzahlregelkreises zur Verfügung. Die Parametrierung selbst kann wiederum aufgrund einer Simulation bekannt sein, oder aufgrund von Herstellerangaben.

Gemäß einer Ausgestaltung wird eine optimale Bremsrampe der mindestens einen sicherheitsgerichteten Funktion ermittelt. Beispielsweise kann der Verlauf einer Bremsrampe optimiert werden, so dass ein Überschwinger im Geschwindigkeitsverlauf minimal ist. Die maximale Schwingamplitude hängt einerseits von der Eigenfrequenz der Mechanik ab, wobei die Schwingamplitude größer ist, je kleiner die Eigenfrequenz ist, und andererseits von der Dauer des Drehmomentsprungs. Eine Optimierung wird insbesondere mit dem Kriterium einer minimalen Bremszeit und einer minimalen Überschwingamplitude durchgeführt.

Die Erfindung betrifft ferner eine Projektierungseinrichtung zum Projektieren einer von einer sicherheitsgerichteten Steuerung angesteuerten Kinematik in einem von mindestens einer Schutzzone begrenzten Arbeitsraum und/ oder der mindestens einen Schutzzone, aufweisend:
- mindestens eine Schnittstelle zum Erhalten eines virtuellen Antriebsreglers der Kinematik und eines Mechanikmodells der Kinematik,
- eine Recheneinrichtung zum Ermitteln von sicherheitsrelevanten Antriebsdaten der Kinematik als Reaktion auf mindestens eine vorgebbare sicherheitsgerichtete Funktion, wobei durch Anwenden des virtuellen Antriebsreglers ein Eingangswert für das Mechanikmodell ermittelt wird und als Ergebnis des Mechanikmodells in Abhängigkeit von dem Eingangswert die sicherheitsrelevanten Antriebsdaten ermittelt werden,
- mindestens eine Schnittstelle zum Ausgeben der sicherheitsrelevanten Antriebsdaten für das Projektieren der Kinematik und/ oder der mindestens einen Schutzzone.

Über Schnittstellen der Projektierungseinrichtung werden vorteilhaft die Modelldaten einerseits empfangen und andererseits die ermittelten sicherheitsrelevanten Antriebsdaten ausgegeben, beispielsweise als Parameter für eine Safety-Projektierung oder ein Anlagenplanungssoftware, für Datenblätter oder als Inbetriebnahmedaten für die Automatisierungsebene, beispielsweise für eine Werkzeugmaschinensteuerung oder eine Bewegungssteuerung.

Die Projektierungseinrichtung und/ oder die Recheneinrichtung können hardwaretechnisch oder auch softwaretechnisch implementiert sein. Bei einer hardwaretechnischen Implementierung können sie als Vorrichtung oder als Teil einer Vorrichtung, zum Beispiel als Computer oder als Mikroprozessor ausgebildet sein. Bei einer softwaretechnischen Implementierung können sie als Computerprogrammprodukt, als eine Funktion, als eine Routine, als Teil eines Programmcodes oder als ausführbares Objekt ausgebildet sein.

Gemäß einer Ausgestaltung ist die Projektierungseinrichtung als Teil einer Engineeringeinrichtung ausgebildet. Die Engineeringeinrichtung ist ebenfalls hardwaretechnisch oder auch softwaretechnisch implementiert und ist beispielsweise als Projektierungs-Software ausgebildet.

Die Erfindung betrifft ferner ein Computerprogrammprodukt umfassend Befehle, die bei der Ausführung des Programms durch einen Computer diesen veranlassen, das Verfahren nach einem der obigen Ausgestaltungen auszuführen. Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die Erfindung wird nachfolgend anhand von Ausführungsbeispielen mit Hilfe der Figuren näher erläutert. Es zeigen:
- Figur 1: eine schematische Darstellung eines Reglermodells für den Einsatz in einem Verfahren gemäß einem ersten Ausführungsbeispiel der Erfindung;
- Figuren 2a-2d: schematische Darstellungen zur Veranschaulichung von Simulationsergebnissen bei Verwendung der Erfindung gemäß einem zweiten Ausführungsbeispiel;
- Figur 3: eine schematische Darstellung eines graphischen Projektierungstools gemäß einem dritten Ausführungsbeispiels der Erfindung.

In den Figuren sind funktionsgleiche Elemente mit denselben Bezugszeichen versehen, sofern nichts anderes angegeben ist.

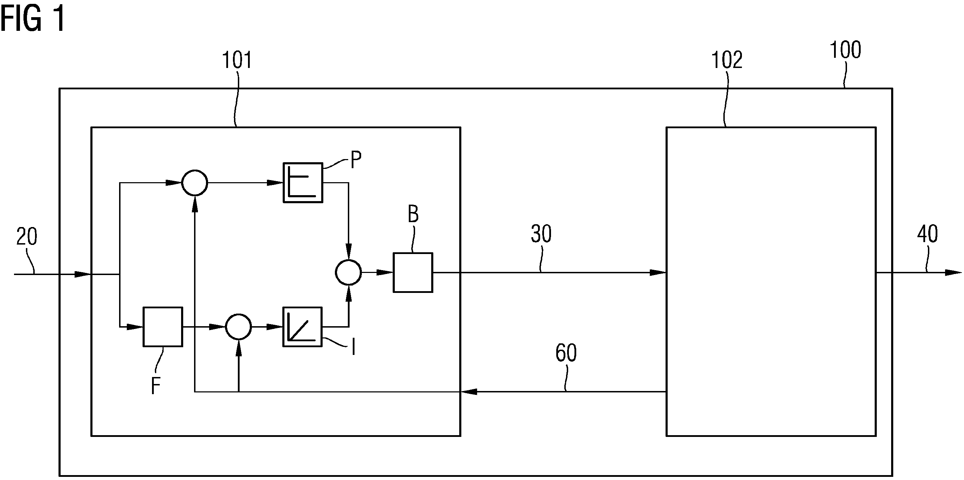

Figur 1 zeigt ein Gesamtmodell eines Drehzahlregelkreises 100, bei dem ein virtueller Antriebsregler 101 und ein Mechanikmodell 102 eines Robotergreifarms eingesetzt werden. Dieses Gesamtmodell wird für die Simulation eines Stoppvorganges, im vorliegenden Ausführungsbeispiel eines Stop B nach EN61800-5-2, zugrunde gelegt, um den Drehzahlregelkreis 100 nachzubilden. Es wird dabei die Antwort des Regelkreises auf einen Sollwertverlauf, beispielsweise einen Sollwertsprung, von einer Anfangsgeschwindigkeit auf einen Wert 0 herunter ermittelt. Als Eingabe wird dem virtuellen Antriebsregler 101 ein Drehzahlsollwertverlauf 20 vorgegeben. Beispielsweise ergibt sich dieser aus einer für den Stop B vorgegebenen Bremsrampe. Der Antriebsregler 101 wird beispielsweise als PI-Regler ausgelegt. Er besteht aus einem P-Glied P und einem I-Glied I, die parallel geschaltet sind. Für den I-Anteil ist ein Filter/Referenzmodell F vorgesehen, der den Sollwert für den I-Anteil anpasst, um ein Überschwingen des Reglers zu reduzieren. Die Summe der Ausgangssignale ergibt den Drehmomentsollwert 30, der anschließend mittels eines Begrenzers B entsprechend den Gegebenheiten des Antriebes und der angeschlossenen Kinematik auf einen Maximalwert begrenzt wird.

Mittels des virtuellen Antriebsreglers wird der Drehmomentsollwert 30 ermittelt, der als Eingangswert in die Regelstrecke gegeben wird. Für die Ermittlung eines Verlaufs eines Drehzahl- oder Lageistwertes wird ein Mechanikmodell 102 zugrunde gelegt, also ein Physikmodell des Robotergreifarms. Dabei gehen alle beteiligten Achsen mit einer jeweiligen spezifischen Trägheit ein, die aus den Masseneigenschaften der einzelnen Glieder des Greifarms zu den jeweils nacheinander eingenommenen Positionen berechnet wird. Als Ergebnis liegt ein Drehzahlistwert 40 auf der Lastseite bzw. nach weiterer Berechnung mittels Integration eines Differentialgleichungsystems der 2. Ordnung ein abtriebsseitiger Lageistwert vor. Ferner ist wie bei einem realen Regler eine Istwertrückführung 60 vorgesehen, die vom Mechanikmodell zum Reglermodell erfolgt.

Somit lässt sich mittels des Gesamtmodells eine Antwort der einzelnen Achs-Lageistwerte auf einen eingeleiteten Stopvorgang ermitteln und die berechneten Istwerte lassen sich vorteilhaft als Verlauf darstellen.

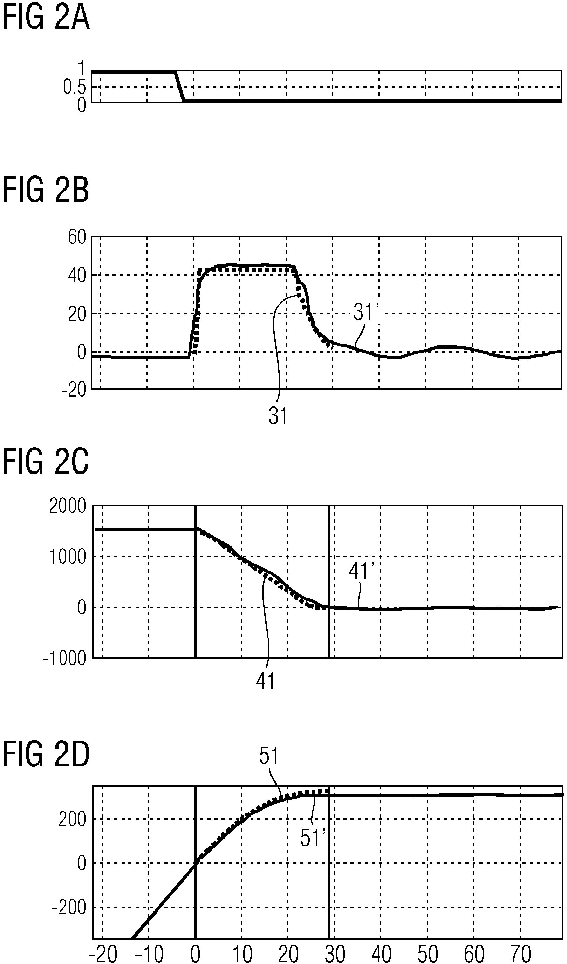

Es lässt sich eine Übereinstimmung der Simulationsergebnisse mit der Realität mittels eines Vergleichs mit realen gemessenen Brems- und Anhaltewegen überprüfen. Die Figuren 2a-2d zeigen einen solchen Vergleich für eine der Achsen. Es wurde ein Stop B der Achse 1 eines Roboterarms des Herstellers Comau (NJ60 2.2) ausgehend von einer Achsgeschwindigkeit von 1500°/min eingeleitet. Die Abszisse aller Graphen in den Figuren 2a-2d trägt die Zeit auf. Beim Zeitpunkt wird ein NOT-AUS-Schalter gedrückt und die Bremsrampe beginnt. Figur 2a zeigt den eingeleiteten Stop B, also das Bit "Not-Aus".

Figur 2b zeigt in einem gemeinsamen Diagramm dargestellt die Graphen des gemessenen Drehmomentsollwertes 31' am Antrieb, dargestellt mit durchgezogener Linie, sowie des simulierten Verlaufs des Drehmomentsollwertes 31, dargestellt mit strichlinierter Kurve, jeweils in der Einheit Nm. Figur 2c zeigt in der gleichen Systematik den gemessenen Drehzahlverlauf 41' sowie den simulierten 41 Drehzahlverlauf an der Ache in Grad/Min. So lässt sich eine simulierte sowie eine gemessene Zeit ablesen, die für den Bremsvorgang benötigt wird, kenntlich gemacht durch die vertikalen Balken. Die Bremszeiten von 29ms bzw. 29,1714ms liegen dabei unter Berücksichtigung von Fehlern nahe genug beieinander, um eine Tauglichkeit des Verfahrens zur Vorab-Bestimmung von sicherheitsgerichteten Antriebsdaten festzustellen.

Im Diagramm der Figur 2d schließlich sind die beiden Kurven des gemessenen Positionsverlaufs 51' sowie des simulierten Positionsverlaufs 51 der Achse in mGrad abgebildet. Hieraus lässt sich der Anhalteweg der Achse ablesen.

Es ist ersichtlich, dass das Modell für den Antriebsregler und das Mechanikmodell des Roboters passend gewählt wurden. Entsprechend sind die mit dem vorgeschlagenen Verfahren vorab ermittelten sicherheitsrelevanten Antriebsdaten, die Bremszeiten und Anhaltewege je Achse und die daraus ermittelbaren maximal erreichbaren Positionen des Roboterarms, für die Auslegung des Roboters sowie die Auslegung der Fertigungs- oder Bearbeitungszelle, in der sich der Roboter bewegt, geeignet. Durch die simulationsbasierte Berechnung ergibt sich der entscheidende Vorteil, nicht mehr auf typischerweise in bestimmten Schritten erfolgte Messungen angewiesen zu sein, sondern bei der Auslegung und Projektierung von Roboter und Roboterzelle für alle denkbaren Ausgangpositionen oder Ausgangsstellungen und Ausgangsgeschwindigkeiten, alle vernünftigerweise erwartbaren Traglastbereiche sowie alle vorgesehenen Stop-Reaktionen kontinuierliche Daten für die Anhaltewege und Anhaltezeiten verfügbar zu haben. Damit wird eine genauere Auslegung von Grenzen zu Türen oder Zellenwänden oder im Falle von Multi-Roboteranlagen zu weiteren Robotern erreicht.

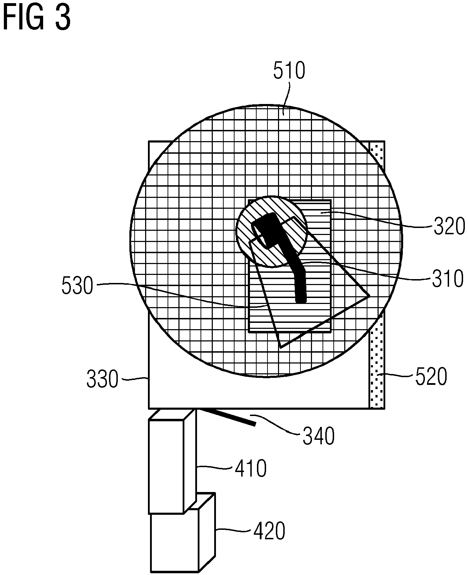

Die Figur 3 zeigt einen Aufbau einer Kinematik, hier eines Roboterarmes 310, einer Werkzeugmaschine, die auf einem Maschinenbett 320 montiert ist. Die Werkzeugmaschine ist von Schutzwänden einer Bearbeitungszelle 330 umgeben. Der Roboterarm 310 kann sich somit nur innerhalb der Bearbeitungszelle 330 bewegen. Oftmals erstreckt sich der Bereich, innerhalb dessen sich Teile des Roboterarms 310 theoretisch und je nach Position der einzelnen Achsen oder Pose des Roboterarms 310 befinden können, über den der Bearbeitungszelle 330 hinaus. Somit ergibt sich ein Überwachungsbereich 510 als der maximal durch Teile der Werkzeugmaschine erreichbare Bereich, innerhalb dessen Sicherheitsfunktionen vorgesehen sein müssen, die insbesondere ein sicherheitsgerichtetes Anhalten der Werkzeugmaschine sicherstellen.

Die Bewegung der Werkzeugmaschine und ihres Roboterarms 310 erfolgt mittels eines Steuerungssystems für die Werkzeugmaschine, welches sich beispielsweise aus einer Steuerungseinrichtung 410 für die Werkzeugmaschine und einer Steuerungseinrichtung 420 für den Roboterarm zusammensetzt.

Im Steuerungssystem werden Sicherheitsfunktionen vorgesehen, die verschiedene Sicherheits-Stopps einleiten. Dafür werden u.a. Bereiche oder Zonen innerhalb des Überwachungsbereiches definiert, die ein Abbremsen über die Steuerung einleiten, sobald ein Teil der Werkzeugmaschine in die definierte Zone eindringt.

Die eingeleiteten Stoppvorgänge können spezifisch und für verschiedene Zonen unterschiedlich konfiguriert werden. Es können u.a. mehrere sich aneinander anschließende Zonen vorgesehen sein, bei welchen beispielsweise niedrigere Maximal-Geschwindigkeiten als Grenzwert vorgesehen sind, je näher sich der Roboterarm 310 einer Wand der Zelle oder einem anderen in der Zelle befindlichen Objekt nähert. Diese Grenzwerte beschränken in der jeweiligen Zone die Bewegungsgeschwindigkeit der Achsen.

Ferner wird beispielsweise für die vier Schutzwände der Zelle eine Schutzzone 520 konfiguriert, die die Wände quaderförmig im Inneren der Zelle umhüllt. Dringt der Roboter mit einem seiner Segmente in diese Sicherheitszone ein, so wird ein Stopp eingeleitet, bei dem die Bewegung geregelt heruntergebremst wird. Vereinfachend ist in der Figur 3 lediglich die Schutzzone 520 einer der Wände dargestellt.

Es werden beispielsweise weiterhin Sicherheitsfunktionen vorgesehen, die einen sofortigen Stopp einleiten, sobald die Sicherheitstür 340 der Fertigungszelle geöffnet wird.

Für die optimale Dimensionierung der Sicherheitsbereiche ermittelt der Planer der Zelle das Verhalten der Werkzeugmaschine im Falle eines eingeleiteten Stoppvorganges. Insbesondere die sicherheitsrelevanten Werte des Bremsweges sowie der Bremszeit der verschiedenen Achsen werden vom Planer der Bearbeitungszelle sowie der Safety-Maßnahmen vorab ermittelt, um einen darauf ausgerichteten Aufbau und eine optimierte Konfiguration vornehmen zu können.

Die sicherheitsrelevanten Antriebsdaten werden mit dem Verfahren nach einem der obigen Ausgestaltungen ermittelt. Gemäß dem dritten Ausführungsbeispiel werden die ermittelten Bremswege für die Konfiguration der Schutzzone 520 der Zellenwände verwendet. Dies erfolgt mittels einer Planungssoftware zur Planung der Bearbeitungszelle in einer Planungsphase. Zugleich werden Installationen innerhalb der Bearbeitungszelle auf die Bremswege hin optimiert ausgerichtet, beispielsweise werden Objekte so positioniert, dass für ein worst-case-Szenario, bei dem der Roboterarm wegen maximaler Last und maximaler Achssträgheit, beispielsweise weil die Segmente oder Glieder einer seriellen Kinematik vollständig ausgestreckt sind, bei einem Stoppvorgang einen maximal langen Bremsweg benötigt, dennoch keine Kollision mit einem Objekt zustande kommt.

Eine graphische Darstellung der Bremswege für den konkret für den Einsatz vorgesehenen Robotertyps erleichtert zudem die Planung des individuellen und optimalen Anhalteweges des Roboters.

Die Darstellung der Bremswege erfolgt beispielsweise anhand einer eingefärbten Fläche am HMI, die den Bremsbereich 530 in der Abbildung der gesamten Bearbeitungszelle markiert. Dieser Bremsbereich leitet sich direkt aus den ermittelten sicherheitsrelevanten Werten des Bremsweges sowie der Bremszeit der verschiedenen Achsen ab. Für die Darstellung eignen sich neben dem gezeigten Bereich in 2-D ebenso 3-D-Darstellungen sowie ferner je nach Anwendung auch 1-D-Darstellungen, falls beispielsweise nur Bewegungen entlang einer Richtung für die Sicherheitseinrichtung relevant ist.

Zudem werden mittels der Simulation ermittelte Bremszeiten für die Konfiguration der Bremsrampe zugrunde gelegt. Beispielsweise werden darauf basierend je Achse individuelle und optimierte Bremsrampen geplant, wobei eine Gestaltung der geregelten Bremsrampe auf Basis des Regler- und Mechanikmodells optimiert wird in Hinblick darauf, wie steil die Rampe sein soll oder welche Form, beispielsweise Parabel, sie haben soll. Die Bremsrampe wird zudem anhand von Simulation verschiedener Szenarien optimiert in Hinblick auf einen kürzest möglichen Anhalteweg.

Die je Achse ermittelten Bremszeiten und -wege werden in einem Roboterdatenblatt aufgeführt, das mit beliebiger Granularität die Werte für verschiedene Auslastungen, Trägheiten und Ausgangsgeschwindigkeiten listen kann.

An den je Achse ermittelten Bremszeiten wird zudem je Achse eine Verzögerungszeit ausgerichtet, nach der eine mechanische Bremse an der jeweiligen Achse eingreift, um beispielsweise unabhängig von der noch vorliegenden und ggf. zu hohen Drehzahl an der jeweiligen Achse einen mechanischen Stopp zu bewirken. Diese Werte werden am Antrieb entsprechend eingestellt. Mit den derart vorbelegten Safety-Werten im Antrieb kann beispielsweise direkt mit einem Abnahmetest der Anlage begonnen werden.

Zusätzlich wird abhängig von den Bremszeiten der einzelnen Achsen eine Gesamt-Verzögerungszeit ab Einleiten des geregelten Stopps konfiguriert, zu der ein Abtrennen von der Energieversorgung für alle Achsen erfolgt.

Obwohl die Erfindung im Detail durch die Ausführungsbeispiele näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Erfindung zu verlassen.

## Patentansprüche

1. Verfahren zum Projektieren einer von einer sicherheitsgerichteten Steuerung angesteuerten Kinematik (310) in einem von mindestens einer Schutzzone (520) begrenzten Arbeitsraum und/ oder der mindestens einen Schutzzone (520), umfassend die Schritte:
- Bereitstellen eines virtuellen Antriebsreglers (101) der Kinematik,
- Bereitstellen eines Mechanikmodells (102) der Kinematik,
- Ermitteln von sicherheitsrelevanten Antriebsdaten der Kinematik als Reaktion auf mindestens eine vorgebbare sicherheitsgerichtete Funktion der Steuerung, wobei durch Anwenden des virtuellen Antriebsreglers (101) ein Eingangswert für das Mechanikmodell (102) ermittelt wird und als Ergebnis des Mechanikmodells (102) in Abhängigkeit von dem Eingangswert die sicherheitsrelevanten Antriebsdaten ermittelt werden,
- Verwenden der sicherheitsrelevanten Antriebsdaten für das Projektieren der Kinematik (310) und/ oder der mindestens einen Schutzzone (520).

2. Verfahren nach Anspruch 1, wobei als sicherheitsrelevante Antriebsdaten Anhaltewege von Achsen der Kinematik ermittelt werden.

3. Verfahren nach Anspruch 1 oder 2, wobei als sicherheitsrelevante Antriebsdaten zu Anhaltewegen von Achsen der Kinematik zugehörige Bremszeiten ermittelt werden.

4. Verfahren nach einem der vorstehenden Ansprüche, wobei basierend auf den sicherheitsrelevanten Antriebsdaten die mindestens eine sicherheitsgerichtete Funktion konfiguriert wird.

5. Verfahren nach einem der vorstehenden Ansprüche, wobei die sicherheitsrelevanten Antriebsdaten in einer graphischen Darstellung angezeigt werden.

6. Verfahren nach Anspruch 5, wobei die sicherheitsrelevanten Antriebsdaten zur graphischen Darstellung an ein Engineeringprogramm übermittelt werden.

7. Verfahren nach einem der vorstehenden Ansprüche, wobei der virtuelle Antriebsregler (101) durch ein Reglermodell gebildet wird, und mittels des Reglermodells ein Drehmomentsollwert in Abhängigkeit von einem Drehzahlsollwert und einem Drehzahlistwert berechnet wird.

8. Verfahren nach Anspruch 7, wobei mittels des Mechanikmodells (102) ein Drehzahlistwert oder Lageistwert in Abhängigkeit von dem Drehmomentsollwert berechnet wird.

9. Verfahren nach einem der vorstehenden Ansprüche, wobei eine optimale Bremsrampe der mindestens einen sicherheitsgerichteten Funktion ermittelt wird.

10. Projektierungseinrichtung zum Projektieren einer von einer sicherheitsgerichteten Steuerung angesteuerten Kinematik (310) in einem von mindestens einer Schutzzone (520) begrenzten Arbeitsraum und/ oder der mindestens einen Schutzzone (520), aufweisend:
- mindestens eine Schnittstelle zum Erhalten eines virtuellen Antriebsreglers (101) der Kinematik (310) und eines Mechanikmodells (102) der Kinematik (310),
- eine Recheneinrichtung zum Ermitteln von sicherheitsrelevanten Antriebsdaten der Kinematik (310) als Reaktion auf mindestens eine vorgebbare sicherheitsgerichtete Funktion, wobei durch Anwenden des virtuellen Antriebsreglers (101) ein Eingangswert für das Mechanikmodell (102) ermittelt wird und als Ergebnis des Mechanikmodells (102) in Abhängigkeit von dem Eingangswert die sicherheitsrelevanten Antriebsdaten ermittelt werden,
- mindestens eine Schnittstelle zum Ausgeben der sicherheitsrelevanten Antriebsdaten für das Projektieren der Kinematik (310) und/ oder der mindestens einen Schutzzone (520).

11. Projektierungseinrichtung nach Anspruch 10, wobei die Projektierungseinrichtung als Teil einer Engineeringeinrichtung ausgebildet ist.

12. Computerprogrammprodukt, umfassend Befehle, die bei der Ausführung des Programms durch einen Computer diesen veranlassen, das Verfahren nach einem der Ansprüche 1-9 auszuführen.
